# EUROPÄISCHE PATENTSCHRIFT

(11) **EP 1 440 783 B1**
(45) Veröffentlichungstag und Bekanntmachung des Hinweises auf die Patenterteilung: **18.04.2007**
(21) Anmeldenummer: 03001687.7
(22) Anmeldetag: 25.01.2003
(51) Int. Cl.: B29C 47/10

(54) **Verfahren zur Herstellung eines Verpackungsbandes**
Method for manufacturing a packaging tape
Procédé de fabrication d'une bande d'emballage

(43) Veröffentlichungstag der Anmeldung: 28.07.2004
(73) Patentinhaber: Motech GmbH Technology & Systems, 69518 Ober-Abtsteinach (DE)
(72) Erfinder: Morton-Finger, Jürgen, Dipl.-Ing., 69469 Weinheim (DE)
(74) Vertreter: Rohmann, Michael

(56) Entgegenhaltungen:
- EP-A- 0 719 626
- EP-A- 0 873 844
- US-A- 4 001 172
- US-A- 4 167 511
- US-A- 4 670 203
- US-B1- 6 409 949

## Beschreibung

Die Erfindung betrifft ein Verfahren zur Herstellung eines Verpackungsbandes aus Polyethylenterephthalat (PET), wobei PET-Material, vorzugsweise PET-Abfallmaterial mit einem Doppelschneckenextruder extrudiert wird, wobei während der Extrusion eine Entgasung des Extruderinnenraumes durchgeführt wird, wobei der schmelzflüssige Kunststoff aus einem dem Doppelschneckenextruder nachgeschalteten Spinnkopf streifenförmig ausgegeben wird und wobei der Kunststoffstreifen anschließend abgekühlt und gereckt wird. Bei dem erfindungsgemäßen Verfahren wird bevorzugt PET-Abfallmaterial eingesetzt. Grundsätzlich kann aber auch jungfräuliches PET als PET-Material eingesetzt werden. - PET-Abfallmaterial meint im Rahmen der Erfindung insbesondere geschredderte PET-Abfälle, vor allem geschredderte gebrauchte PET-Flaschen. Durch das Schreddern werden sogenannte PET-Flakes erzeugt, die vorzugsweise bei dem erfindungsgemäßen Verfahren eingesetzt werden.

PET-Abfallmaterial ist kostengünstiger als PET-Neuware bzw. PET-Neugranulat. Das PET-Abfallmaterial hat aber beachtliche Nachteile. Es zeichnet sich zunächst durch einen nachteilhaft hohen Verunreinigungsgrad sowie durch eine relativ geringe Molekülkettenlänge aus. Außerdem weist das PET-Abfallmaterial einen verhältnismäßig hohen Feuchtigkeitsgehalt auf und liegt im Übrigen in amorpher Form vor.

Ein Verfahren der oben beschriebenen Art von dem die Erfindung ausgeht, ist bekannt (EP 0 873 844 A2). Mit diesem bekannten Verfahren können PET-Folien hergestellt werden.

Weiterhin ist aus der Praxis bekannt, PET-Abfallmaterial aufzuarbeiten und insbesondere zu Fasern weiter zu verarbeiten. Dazu wird das PET-Abfallmaterial zunächst kristallisiert und anschließend getrocknet und erst danach wird das entsprechend bearbeitete Abfallmaterial extrudiert. Der Kristallisierungs- und Trocknungsvorgang kann bis zu acht Stunden dauern, so dass oftmals erst nach mehreren Stunden deutlich wird, ob sich das Material zur Weiterverarbeitung eignet. Wenn sich herausstellt, dass eine Materialscharge eine schlechte Qualität aufweist, sind Produktionsausfälle die Folge. Außerdem ist die Kristallisation und Trocknung sehr energieaufwendig und kostenaufwendig.

Ebenso ist es bekannt (EP 1 226 922 A1) noch feuchtes PET-Material mit Hilfe eines Doppelschneckenextruders zu verarbeiten. Der Extruderinnenraum dieses Doppelschneckenextruders wird mit Hilfe von Pumpen entgast, so dass dem PET-Material die Feuchtigkeit entzogen wird. Mit diesem bekannten Verfahren wird lediglich PET-Granulat erzeugt.

Der Erfindung liegt das technische Problem zugrunde, ein Verfahren zur Herstellung eines Verpackungsbandes anzugeben, mit dem Verpackungsbänder mit optimalen mechanischen Eigenschaften hergestellt werden können, insbesondere Verpackungsbänder mit einer hohen Festigkeit und einer hervorragenden Dehnbarkeit.

Zur Lösung dieses technischen Problems lehrt die Erfindung ein Verfahren der eingangs genannten Art, welches dadurch gekennzeichnet ist,
dass mit einem dem Doppelschneckenextruder nachgeschalteten Siebfilter gearbeitet wird und dass der Schmelzdruck in Förderrichtung vor dem Siebfilter und hinter dem Siebfilter gemessen wird und dass nach Maßgabe der gemessen Druckwerte die Dosierung des PET-Materials zum Doppelschneckenextruder und/oder die Drehzahl des Doppelschneckenextruders variiert wird.

PET-Abfallmaterial meint im Rahmen der Erfindung, dass das Material aus zumindest 50 Gew.-%, vorzugsweise aus zumindest 80 Gew.-%, und bevorzugt aus zumindest 90 Gew.-% PET-Abfallmaterial bzw. PET-Recyclat besteht. Sehr bevorzugt besteht das verwendete PET-Material vollständig aus PET-Abfallmaterial. Es liegt insbesondere im Rahmen der Erfindung, dass das erfindungsgemäß eingesetzte PET-Abfallmaterial von gebrauchten PET-Flaschen stammt. Zweckmäßigerweise werden die gebrauchten PET-Flaschen geschreddert, so dass so genannte PET-Flakes entstehen, die im Rahmen des erfindungsgemäßen Verfahrens bevorzugt eingesetzt werden. Das PET-Abfallmaterial kann aber auch von gebrauchten PET-Folien stammen. Grundsätzlich kann bei dem Verfahren auch jungfräuliches PET eingesetzt werden. - Von besonderer Bedeutung ist bei dem erfindungsgemäßen Verfahren, dass das PET-Material sowohl ohne Vorkristallisation als auch ohne Vortrocknung eingesetzt wird bzw. dem Doppelschneckenextruder zugeführt wird.

Weiterhin liegt im Rahmen der Erfindung, dass dem Doppelschneckenextruder ein Siebfilter nachgeschaltet ist. Erfindungsgemäß wird der Schmelzedruck in Förderrichtung vor dem Siebfilter und hinter dem Siebfilter gemessen und nach Maßgabe der gemessenen Druckwerte wird die Dosierung des PET-Materials zum Doppelschneckenextruder und/oder die Drehzahl des Doppelschneckenextruders variiert. Die vorstehend erläuterte Druckregelung ist insbesondere sehr hilfreich beim Spülen des Siebfilters. Es ist nämlich vorzugsweise ein Rückspülsystem vorgesehen und in Abhängigkeit von der Verschmutzung des Siebfilters wird Schmelze ins Freie abgeführt, um Schmutz aus dem Sieb zu spülen. Bei dem Spülvorgang wird kurzfristig zusätzliches Material vom Doppelschneckenextruder benötigt. Mit der erfindungsgemäßen Druckregelung kann diese Rückspülung problemlos erfolgen, ohne das sich störende Beeinträchtigungen des Produktionsablaufs ergeben.

Nach bevorzugter Ausführungsform wird das PET-Abfallmaterial dem Doppelschneckenextruder mit zumindest einer Dosierschnecke zugeführt. Die Dosierung des PET-Materials kann dabei durch Einstellung der Drehzahl der Dosierschnecke verändert werden. Soweit hier und nachfolgend eine Dosierschnecke erwähnt wird meint der Begriff Dosierschnecke auch ganz allgemein eine Dosiervorrichtung. Bevorzugt wird aber eine Dosierschnecke als Dosiervorrichtung eingesetzt. Auf diese Weise kann eine sehr genaue Zudosierung des PET-Materials erzielt werden. Vorzugsweise wird der Doppelschneckenextruder unterfüttert mit der Maßgabe gefahren, dass die Schneckengänge lediglich zu 25 bis 60 %, bevorzugt nur zu 30 bis 50 % mit dem PET-Material gefüllt sind. Diese Fütterung bzw. Unterfütterung des Doppelschneckenextruders kann effektiv mit Hilfe der bevorzugt eingesetzten Dosierschnecke verwirklicht werden. Nach sehr bevorzugter Ausführungsform der Erfindung wird mit einem Doppelschneckenextruder mit in gleicher Richtung rotierenden Extruderschnecken gearbeitet. Beide Extruderschnecken des Doppelschneckenextruders haben bei dieser Ausführungsform also die gleiche Drehrichtung bzw. Rotationsrichtung.

Zweckmäßigerweise wird die Entgasung des Extruderinnenraumes mit Hilfe von zumindest einer an den Extruderinnenraum angeschlossenen Pumpe bzw. Vakuumpumpe durchgeführt. Nach einer bevorzugten Ausführungsform der Erfindung findet die Entgasung an zumindest zwei in Förderrichtung hintereinander angeordneten Anschlussstellen des Extruderinnenraumes statt.

Nach sehr bevorzugter Ausführungsform, der im Rahmen der Erfindung ganz besondere Bedeutung zukommt, wird dem PET-Material zumindest eine Kettenverlängerungssubstanz zugesetzt. Zweckmäßigerweise wird zumindest eine Kettenverlängerungssubstanz in den Extruderinnenraum eingespeist. Mit anderen Worten wird das PET-Material im Extruderinnenraum mit der Kettenverlängerungssubstanz vermischt. Die Zugabe der Kettenverlängerungssubstanz erfolgt vorzugsweise in Förderrichtung hinter der Entgasung in den Extruderinnenraum. Eine Kettenverlängerungssubstanz wird auch als sogenannter "Chain Extender" bezeichnet. Die Kettenverlängerungssubstanz hat die Eigenschaft, sich an die Molekülkettenenden des PET anzukoppeln und zwei PET-Molekülketten miteinander zu verbinden. Vorzugsweise wird ein Lactamderivat und/oder ein Oxazolderivat als Kettenverlängerungssubstanz eingesetzt. Nach einer Ausführungsform wird ein Caprolactamderivat als Kettenverlängerungssubstanz verwendet. Es liegt im Rahmen der Erfindung ein Lactamat als Kettenverlängerungssubstanz einzusetzen und sehr bevorzugt wird Carbonylbiscaprolactamat verwendet. Nach einer anderen Ausführungsform wird ein Oxazolin als Kettenverlängerungssubstanz zugesetzt. Oxazolin meint hier ein Oxazolderivat, das lediglich eine Doppelbindung aufweist. Nach einer bevorzugten Ausführungsform kann 1,4-Phenylenbisoxazolin als Kettenverlängerungssubstanz verwendet werden.

Es liegt im Rahmen der Erfindung, dass die aus dem Doppelschneckenextruder stammende PET-Schmelze dem Spinnkopf mit zumindest einer Schmelzepumpe zugeführt wird. Dem Einsatz einer solchen Schmelzepumpe kommt im Rahmen der Erfindung besondere Bedeutung zu. Zweckmäßigerweise ist die Schmelzepumpe hinter dem Doppelschneckenextruder und dem Siebfilter angeordnet. Dies meint im Rahmen der Erfindung, dass sich der Siebfilter zwischen den Doppelschneckenextrudern und der Schmelzepumpe befindet.

Es liegt im Rahmen der Erfindung, dass der aus dem Spinnkopf austretende Kunststoffstreifen mit Hilfe eines fluiden Mediums, vorzugsweise in einem Wasserbad abgekühlt wird. Nach der Abkühlung wird der Kunststoffstreifen zweckmäßigerweise in zumindest einer Reckvorrichtung gereckt.

Der Erfindung liegt die Erkenntnis zugrunde, das mit dem erfindungsgemäßen Verfahren aus relativ kostengünstigem PET-Abfall ein Verpackungsband mit überraschend vorteilhaften Eigenschaften hergestellt werden kann. Das Verpackungsband weist eine hervorragende Festigkeit sowie optimale Dehnungseigenschaften auf. Mit dem erfindungsgemäßen Verfahren kann auf einfache, wenig aufwendige und kostengünstige Weise ein Verpackungsband hergestellt werden, das allen Anforderungen entspricht.

Nachfolgend wird die Erfindung anhand einer lediglich ein Ausführungsbeispiel darstellenden Zeichnung näher erläutert. Es zeigen in schematischer Darstellung:

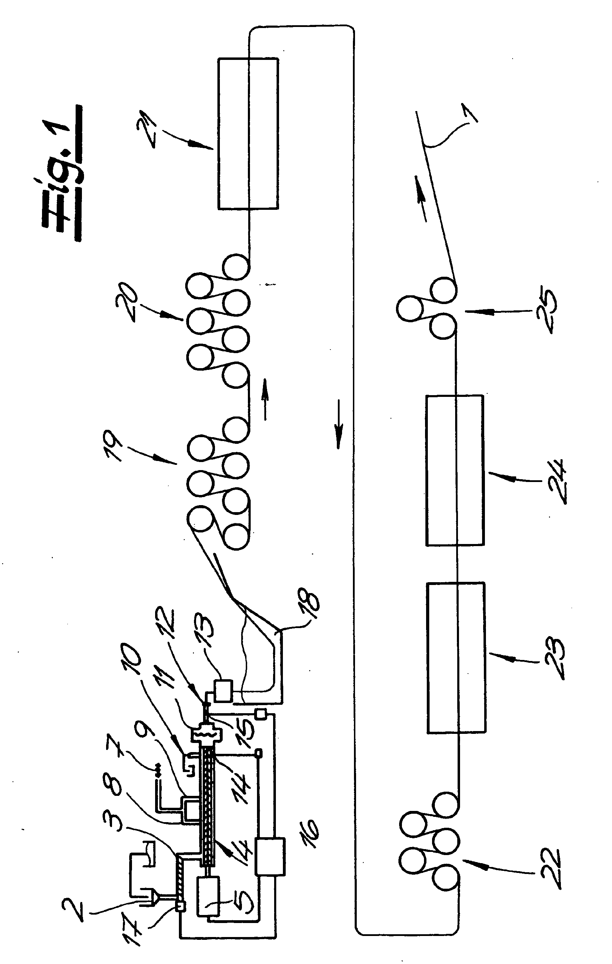

- **Fig. 1**: eine Vorrichtung zur Durchführung des erfindungsgemäßen Verfahrens und

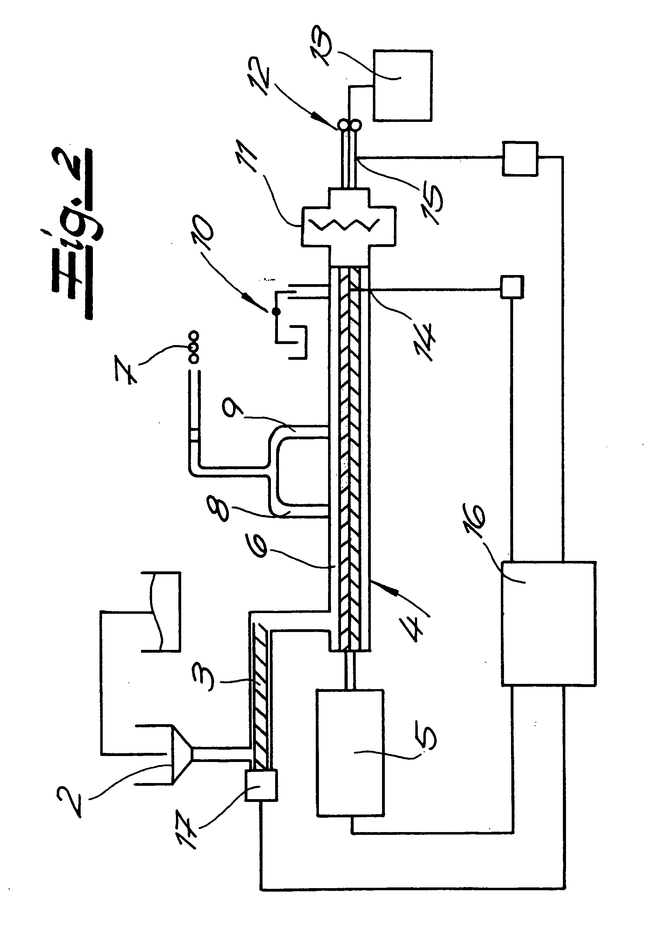

- **Fig. 2**: einen vergrößerten Ausschnitt aus der Fig. 1.

Die Figuren zeigen eine Vorrichtung zur Durchführung des erfindungsgemäßen Verfahrens zur Herstellung eines Verpackungsbandes 1 aus Polyethylenterephthalat (PET). PET-Abfallmaterial wird in Form von PET-Flakes 2, die durch Schreddern von gebrauchten PET-Flaschen erhalten wurden, mit einer Dosierschnecke 3 einem Doppelschneckenextruder 4 zugeführt, mit dem das PET-Abfallmaterial extrudiert wird. Die PET-Flakes 2 werden dabei von der Dosierschnecke 3 dem Doppelschneckenextruder 4 mit der Maßgabe zudosiert, dass der Doppelschneckenextruder 4 unterfüttert gefahren wird, so dass die Schneckengänge der beiden Extruderschnecken nur zu etwa 30 bis 50 % mit dem PET-Abfallmaterial gefüllt sind. Der Doppelschneckenextruder 4 weist im Übrigen zwei in gleicher Drehrichtung rotierende Extruderschnecken auf, die von einem Extrudermotor 5 angetrieben werden. Der Extruderinnenraum 6 wird mit Hilfe einer Vakuumpumpe 7 entgast. Hierzu sind zwei in Förderrichtung des Doppelschneckenextruders 4 hintereinander angeordnete Entgasungsleitungen 8, 9 an den Extruderinnenraum 6 angeschlossen. Durch diese Entgasung wird erreicht, dass dem PET-Abfallmaterial effektiv die Feuchtigkeit entzogen werden kann. In Förderrichtung hinter den Entgasungsleitungen 8, 9 wird mit Hilfe einer Dosiereinrichtung 10 dem PET-Abfallmaterial bzw. dem Extruderinnenraum 6 eine Kettenverlängerungssubstanz zudosiert. Bei der Kettenverlängerungssubstanz mag es sich im Ausführungsbeispiel um Carbonylbiscaprolactamat handeln.

Dem Doppelschneckenextruder 4 ist ein Siebfilter 11 nachgeschaltet, an den eine Schmelzepumpe 12 anschließt. Mit der Schmelzepumpe 12 wird die PET-Schmelze einem Spinnkopf 13 zugeführt, aus dem die PET-Schmelze streifenförmig austritt. Im Ausführungsbeispiel wird der Schmelzedruck an einer ersten Messstelle 14 vor dem Siebfilter 11 bzw. vor der Schmelzepumpe 12 gemessen sowie an einer zweiten Messstelle 15 hinter dem Siebfilter 11 bzw. an der Schmelzepumpe 12. Mit einer Regeleinrichtung 16 kann in Abhängigkeit von den gemessenen Druckwerten die Drehzahl des Doppelschneckenextruders 4 am Extrudermotor 5 eingestellt werden und/oder die Drehzahl der Dosierschnecke 3 am Antriebsmotor 17 der Dosierschnecke 3. Auf diese Weise kann funktionssicher und effektiv die Versorgung bzw. Förderung des Kunststoffmaterials auf die jeweiligen Gegebenheiten abgestellt werden.

Das aus dem Spinnkopf 13 austretende streifenförmige bzw. bahnförmige PET wird anschließend zur Kühlung durch ein Wasserbad 18 geleitet, das beispielsweise eine Temperatur von 60° C hat. Daraufhin wird der streifenförmige Kunststoff zweckmäßigerweise zunächst durch eine erste Reckvorrichtung 19 geführt, die beispielsweise mit einer Fördergeschwindigkeit von 15 m/min. arbeitet. Anschließend wird im Ausführungsbeispiel der streifenförmige Kunststoff durch eine zweite Reckvorrichtung 20 geführt, die beispielsweise mit einer Fördergeschwindigkeit von 60 m/min. arbeitet. Zwischen den Reckvorrichtungen 19 und 20 wird der Kunststoffstreifen in Längsrichtung bzw. in Förderrichtung gereckt. Im Anschluss daran wird der streifenförmige Kunststoff durch einen Ofen 21 geführt, in dem er erwärmt wird, und zwar vorzugsweise über die Glastemperatur erwärmt wird. Daraufhin wird der Kunststoffstreifen durch eine dritte Reckvorrichtung 22 geführt, die beispielsweise mit einer Fördergeschwindigkeit von 90 m/min arbeitet. Zwischen den Reckvorrichtungen 20 und 22 wird der Kunststoffstreifen ebenfalls in Längsrichtung bzw. in Förderrichtung gereckt. Anschließend wird die streifenförmige Kunststoffbahn durch eine Fixierungseinrichtung 23 geführt, in der die Kunststoffbahn erwärmt wird. Im Anschluss daran findet in der Abkühlungsvorrichtung 24 eine Abkühlung der Kunststoffbahn statt. Daraufhin wird die Kunststoffbahn durch eine vierten Reckvorrichtung 25 geführt, die beispielsweise mit einer Arbeitsgeschwindigkeit von 85 m/min. arbeitet. Zuletzt wird die Kunststoffbahn in einer nicht dargestellten Wickelvorrichtung aufgewickelt. Die so hergestellte Kunststoffbahn bzw. Kunststoffstreifen eignet sich in hervorragender Weise als Verpackungsband.

### Ausführungsbeispiel:

Aus jungfräulichem PET-Material wurde nach dem Stand der Technik ein Verpackungsband hergestellt, dass eine Festigkeit von 550 N/mm² und eine Dehnung von 15 % aufwies. Aus vorgetrockneten PET-Flakes wurde nach dem Stand der Technik ein Verpackungsband mit einer Festigkeit von 500 N/mm² und einer Dehnung von 15 % erhalten. Nach dem erfindungsgemäßen Verfahren wurden ungetrocknete PET-Flakes zu einem Verpackungsband mit einer Festigkeit von 750 N/mm² und einer Dehnung von 15 % verarbeitet.

## Patentansprüche

1. Verfahren zur Herstellung eines Verpackungsbandes (1) aus Polyethylenterephthalat (PET),
wobei PET-Material, vorzugsweise PET-Abfallmaterial mit einem Doppelschneckenextruder (4) extrudiert wird,
wobei während der Extrusion eine Entgasung des Extruderinnenraumes (6) durchgeführt wird,
wobei der schmelzflüssige Kunststoff aus einem dem Doppelschneckenextruder (4) nachgeschalteten Spinnkopf (13) streifenförmig ausgegeben wird,
wobei der Kunststoffstreifen anschließend abgekühlt und gereckt wird,
**dadurch gekennzeichnet,**
**dass** mit einem dem Doppelschneckenextruder (4) nachgeschalteten Siebfilter (11) gearbeitet wird und dass der Schmelzedruck in Förderrichtung vor dem Siebfilter (11) und hinter dem Siebfilter (11) gemessen wird und dass nach Maßgabe der gemessenen Druckwerte die Dosierung des PET-Materials zum Doppelschneckenextruder (4) und/oder die Drehzahl des Doppelschneckenextruders (4) variiert wird.

2. Verfahren nach Anspruch 1, **dadurch gekennzeichnet, dass** das PET-Material dem Doppelschneckenextruder (4) mit zumindest einer Dosierschnecke (3) zugeführt wird.

3. Verfahren nach Anspruch 1 oder 2, **dadurch gekennzeichnet, dass** der Doppelschneckenextruder (4) unterfüttert mit der Maßgabe gefahren wird, dass die Schneckengänge der beiden Extruderschnecken nur zu 25 bis 60 %, bevorzugt nur zu 30 bis 50 % mit dem PET-Material gefüllt sind.

4. Verfahren nach einem der Ansprüche 1 bis 3, **dadurch gekennzeichnet, dass** mit einem Doppelschneckenextruder (4) mit in gleicher Richtung rotierenden Extruderschnecken gearbeitet wird.

5. Verfahren nach einem der Ansprüche 1 bis 4, **dadurch gekennzeichnet, dass** die Entgasung des Extruderinnenraumes (6) mittels zumindest einer an den Extruderinnenraum (6) angeschlossenen Pumpe durchgeführt wird.

6. Verfahren nach einem der Ansprüche 1 bis 5, **dadurch gekennzeichnet, dass** zumindest eine Kettenverlängerungssubstanz in den Extruderinnenraum (6) eingespeist wird.

7. Verfahren nach Anspruch 6, **dadurch gekennzeichnet, dass** ein Lactamderivat und/oder Oxazolderivat als Kettenverlängerungssubstanz eingesetzt wird.

8. Verfahren nach einem der Ansprüche 1 bis 7, **dadurch gekennzeichnet, dass** die PET-Schmelze dem Spinnkopf (13) mit zumindest einer Schmelzepumpe (12) zugeführt wird.

9. Verfahren nach einem der Ansprüche 1 bis 8, **dadurch gekennzeichnet, dass** der aus dem Spinnkopf (13) austretende Kunststoffstreifen mit Hilfe eines fluiden Mediums, vorzugsweise in einem Wasserbad (18) abgekühlt wird.

## Claims

1. A process for manufacturing a packaging band (1) made of polyethylene terephthalate (PET),
whereby PET material, is preferably PET waste material that is extruded with a twin-screw extruder (4),
whereby during the extrusion degassing of the extruder interior chamber (6) is carried out,
whereby the molten plastic is delivered in strip form from a spinning head (13) connected downstream of the twin-screw extruder (4),
whereby the plastic strip is subsequently cooled down and fully drawn,
**characterised in that**
a sieve filter (11) connected downstream of the twin-screw extruder (4) is used and that the molten pressure is measured in the conveying direction in front of the sieve filter (11) and behind the sieve filter (11) and that according to the measured pressure values the process of metering PET material to the twin-screw extruder (4) and/or the speed of the twin-screw extruder (4) are/is varied.

2. A process according to Claim 1, **characterised in that** the PET material is fed to the twin-screw extruder (4) with at least a metering screw (3).

3. A process according to Claim 1 or 2, **characterised in that** the twin-screw extruder (4) is operated with the provision that the screw flights of the two extruder screws are only filled up with the PET material from 25 to 60 %, preferably only from 30 to 50 %.

4. A process according to one of the Claims 1 to 3, **characterised in that** it operates with one twin-screw extruder (4) with extruder screws rotating in the same direction.

5. A process according to one of the Claims 1 to 4, **characterised in that** at least a pump connected to the extruder interior chamber (6) is used for degasing the extruder interior chamber.

6. A process according to one of the Claims 1 to 5, **characterised in that** at least one chain extension substance is fed into the extruder interior chamber (6).

7. A process according to Claim 6, **characterised in that** a lactam derivative and/or oxazole derivative is utilized as a chain extension substance.

8. A process according to one of the Claims 1 to 7, **characterised in that** the molten PET is fed to the spinning head (13) with at least one molten PET pump (12).

9. A process according to one of the Claims 1 to 8 **characterised in that** the plastic strips coming out of the spinning head (13) are cooled with the help of a fluid medium, preferably in a water bath (18).

## Revendications

1. Procédé de fabrication d'une bande d'emballage (1) en polyéthylène téréphtalate (PET),
la matière en PET, de préférence des déchets de matières en PET, étant extrudée au moyen d'une extrudeuse à deux vis (4),
un dégazage de la chambre intérieure (6) de l'extrudeuse étant réalisé pendant l'extrusion,
la matière plastique en fusion étant déchargée en forme de bandes d'une tête à filer (13) installée en aval de l'extrudeuse à deux vis (4),
les bandes en matière plastique étant ensuite refroidies et étirées,
**caractérisé en ce**
**que** l'usinage est réalisé au moyen d'un filtre à tamis (11) installé en aval de l'extrudeuse à deux vis (4) et en ce que la pression de fusion est mesurée dans le sens du déplacement en aval du filtre à tamis (11) et en amont du filtre, à tamis (11) et en ce que le dosage de la matière en PET vers l'extrudeuse à deux vis (4) et/ou la vitesse de l'extrudeuse à deux vis (4) varient selon les valeurs de pression mesurées.

2. Procédé selon la revendication 1, **caractérisé en ce que** la matière en PET est amenée à l'extrudeuse à deux vis (4) au moyen d'au moins une vis de dosage (3).

3. Procédé selon la revendication 1 ou 2, **caractérisé en ce que** l'extrudeuse à deux vis (4) est opérée en étant sous-alimentée conformément à la condition que les pas de vis des deux vis d'extrudeuse soient seulement remplis de 25 à 60%, de préférence seulement de 30 à 50%, de matière en PET.

4. Procédé selon l'une quelconque des revendications 1 à 3, **caractérisé en ce que** l'usinage est réalisé au moyen d'une extrudeuse à deux vis (4) munies de vis d'extrudeuse tournant dans le même sens.

5. Procédé selon l'une quelconque des revendications 1 à 4, **caractérisé en ce que** le dégazage de la chambre intérieure (6) de l'extrudeuse est réalisé au moyen d'au moins une pompe raccordée à la chambre intérieure (6) de l'extrudeuse.

6. Procédé selon l'une quelconque des revendications 1 à 5, **caractérisé en ce qu'**au moins une substance d'allongement de chaîne est alimentée dans la chambre intérieure (6) de l'extrudeuse.

7. Procédé selon la revendication 6, **caractérisé en ce qu'**un dérivé de lactame et/ou un dérivé d'oxazole sont utilisés en tant que substance d'allongement de chaîne.

8. Procédé selon l'une quelconque des revendications 1 à 7, **caractérisé en ce que** la matière fondue en PET est amenée à la tête à filer (13) au moyen d'au moins une pompe de fusion (12).

9. Procédé selon l'une quelconque des revendications 1 à 8, **caractérisé en ce que** les bandes de matière plastique sortant de la tête à filer (13) sont refroidies à l'aide d'un fluide, de préférence dans un bain d'eau (18).
